# EUROPEAN PATENT APPLICATION

(11) **EP 3 822 808 A1**
(43) Date of publication of application: **19.05.2021**
(21) Application number: 19837488.6
(22) Date of filing: 19.06.2019
(51) Int. Cl.: G06F 16/24

(54) **METHOD, DEVICE AND APPARATUS FOR ACCESSING HETEROGENEOUS DATABASE, PLUG-IN AND STORAGE MEDIUM**

(30) Priority: 16.07.2018 CN 201810776045
(71) Applicant: ZTE Corporation, shenzhen Guangdong 518057 (CN)
(72) Inventor: LIU, Sujing, Shenzhen, Guangdong 518057 (CN)
(74) Representative: Betten & Resch
(86) International application number: PCT/CN2019/091948
(87) International publication number: WO 2020/015495

(57) **Abstract**

A method, device and apparatus for accessing a heterogeneous database by means of a distributed database, a heterogeneous query plug-in and a computer-readable storage medium. The method comprises: modifying a query statement that is received by a data storage node and comprises prompt information of a distributed database (S11); and forwarding the modified query statement to a heterogeneous database such that the heterogeneous database executes the modified query statement (S12).

## Description

### CROSS-REFERENCE TO RELATED APPLICATION

The present application is based on Chinese Patent Application No. 201810776045.6, filed on Jul. 16, 2018, and claims the priority of the Chinese Patent Application, the entire content of which is hereby incorporated by reference.

### TECHNICAL FIELD

Embodiments of the present application relate to, but not limited to, the field of database technology.

### BACKGROUND

With the development of database technology and the continuous expansion of application fields, traditional database systems may not meet the needs of modern data processing, but existing database systems can't be completely discarded, so heterogeneous database systems become possible.

A heterogeneous database system is a collection of multiple related database systems. Heterogeneous databases are respective databases of the heterogeneous database system, which have their own application characteristics, integrity controls and security controls. Heterogeneous databases may be MySQL, Oracle, SQL Server, etc., which are all relational database management systems (RDBMS). Heterogeneous databases may be databases with different data models, such as relational database, schema database, hierarchical database, network database, object-oriented database and functional database. Heterogeneous databases may also run on mainframes, minicomputers, workstations, PCs or embedded systems, respectively.

However, how to operate a heterogeneous database by a distributed database is a current problem.

### SUMMARY

In view of the above, embodiments of the present application provide a distributed database access heterogeneous database method, apparatus, apparatus, heterogeneous query plug-in and computer-readable storage medium.

The technical schemes adopted in the embodiments of this application are as follows.

According to one aspect of embodiments of the present application, there is provided a method for accessing a heterogeneous database by a distributed database, including: modifying a query statement that is received by a data storage node and comprises a hint of the distributed database; and forwarding the modified query statement to the heterogeneous database such that the modified query statement is executable by the heterogeneous database.

According to another aspect of embodiments of the present application, there is provided a heterogeneous query plug-in, including a memory, a processor, and a computer program stored in the memory and executable by the processor, wherein the computer program, when executed by the processor, cause the processor to perform the above method for accessing a heterogeneous database by a distributed database.

According to another aspect of embodiments of the present application, there is provided a method for accessing a heterogeneous database by a distributed database, including: determining a target data storage node according to a query statement sent by a client and generating a query statement that comprises a hint of the distributed database; sending the query statement that comprises the hint of the distributed database to the target data storage node; modifying the query statement that is received by the target data storage node and comprises the hint of the distributed database; and forwarding the modified query statement to the heterogeneous database such that the modified query statement is executable by the heterogeneous database.

According to another aspect of embodiments of the present application, there is provided a device for accessing a heterogeneous database by a distributed database, including: a middleware, configured to determine a target data storage node according to a query statement sent by a client and generate a query statement that comprises a hint of the distributed database; and send the query statement that comprises the hint of the distributed database to the target data storage node; and a heterogeneous query plug-in, configured to modify the query statement that is received by the target data storage node and comprises the hint of the distributed database; and forward the modified query statement to the heterogeneous database such that the modified query statement is executable by the heterogeneous database.

According to another aspect of embodiments of the present application, there is provided an apparatus for accessing a heterogeneous database by a distributed database, including a memory, a processor, and a computer program stored on the memory and executable by the processor, wherein the computer program, when executed by the processor, cause the processor to perform the above method for accessing a heterogeneous database by a distributed database.

According to another aspect of embodiments of the present application, there is provided a computer-readable storage medium storing a computer program which, when executed by a processor, cause the processor to perform the method for accessing a heterogeneous database by a distributed database.

The method, device and apparatus for accessing a heterogeneous database by a distributed database, the heterogeneous query plug-in and the computer-readable storage medium in the embodiments of the present application realizes the operation of tables in the heterogeneous database by the distributed database, supports the joint query of local tables and tables in the heterogeneous database, and therefore has good scalability and operability.

### BRIEF DESCRIPTION OF DRAWINGS

FIG. 1 is a schematic flowchart of a method for accessing a heterogeneous database by a distributed database according to a first embodiment of the present application;
FIG. 2 is a schematic structural diagram of a heterogeneous query plug-in according to a second embodiment of the present application;
FIG. 3 is a schematic flowchart a method for accessing a heterogeneous database by a distributed database according to a third embodiment of the present application;
FIG. 4 is a system structure diagram for accessing a heterogeneous database by a distributed database according to an embodiment of the present application;
FIG. 5 is a sequence diagram for creating a mapping table according to an embodiment of the present application;
FIG. 6 is a sequence diagram of a single-table strong consistency query according to an embodiment of the present application;
FIG. 7 is a sequence diagram of a two-table joint strong consistency query according to an embodiment of the present application;
FIG. 8 is a schematic structural diagram of an apparatus for accessing a heterogeneous database by a distributed database according to a fourth embodiment of the present application; and
FIG. 9 is a structural diagram of a device for accessing a heterogeneous database by a distributed database according to a fifth embodiment of the present application.

The implementation, functional features and advantages of the present application will be described with reference to the accompanying drawings in conjunction with embodiments.

### DETAILED DESCRIPTION

In order to make the technical problems to be solved, technical schemes and beneficial effects in the present application clear, the following describes the present application in detail with reference to the accompanying drawings and embodiments. It should be understood that the embodiments described herein are merely intended to explain the present application and are not intended to limit the present application.

### First embodiment

According to a first embodiment of the present application, a method for accessing a heterogeneous database by a distributed database is provided, which is applied to a heterogeneous query plug-in. Because a data storage node in a distributed database management system can support a plug-in storage engine, a new heterogeneous query plug-in is developed on the data storage nodes of distributed databases to realize the operation of the heterogeneous database by the distributed database.

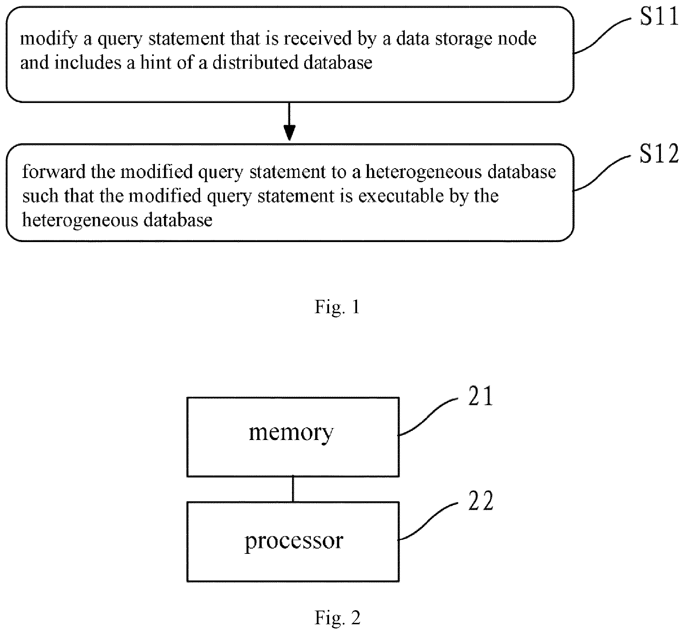

As shown in FIG. 1, the method includes steps of S11 to S12.

At S11, a query statement that is received by a data storage node and includes a hint of the distributed database is modified.

In this embodiment, the data storage node is a data storage node of the distributed database.

A database cluster is used to store data, execute atomic SQL operations and control local transactions. Each database cluster is composed of multiple data storage nodes, and the data is divided according to certain rules and stored in the data storage nodes.

Tables in the distributed database have two concepts: distribution attributes and distribution nodes. According to different distribution attributes, tables may be divided into replication tables, hash tables, list tables and range tables. The distribution nodes indicate which data storage nodes the data tables are distributed on.

In this embodiment, the modification of the query statement that is received by the data storage node and includes the hint of the distributed database means the removal of the hint of the distributed database.

At S12, the modified query statement is forwarded to the heterogeneous database such that the modified query statement is executable by the heterogeneous database.

In this embodiment, the heterogeneous database includes but is not limited to Oracle, MySQL, SQLServer, DB2 and Sybase.

In this embodiment, the heterogeneous database can execute the modified query statement after receiving the modified query statement, and returns a result set.

According to the method for accessing a heterogeneous database by a distributed database in the embodiments of the present application, the operation of tables in the heterogeneous database by the distributed database is realized, and the joint query of local tables and tables in the heterogeneous database is supported, so that the method has good scalability and operability.

### Second embodiment

As shown in FIG. 2, according to a second embodiment of the present application, a heterogeneous query plug-in is provided, including a memory 21, a processor 22, and a computer program stored in the memory 21 and executable by the processor 22. The processor 22 executes the computer program to implement the following steps of the method for accessing a heterogeneous database by a distributed database:
- modifying a query statement that is received by a data storage node and includes a hint of the distributed database; and
- forwarding the modified query statement to the heterogeneous database such that the modified query statement is executable by the heterogeneous database.

According to the heterogeneous query plug-in in the embodiments of the present application, the operation of tables in the heterogeneous database by the distributed database is realized, and the joint query of local tables and tables in the heterogeneous database is supported, so that the heterogeneous query plug-in has good scalability and operability.

### Third embodiment

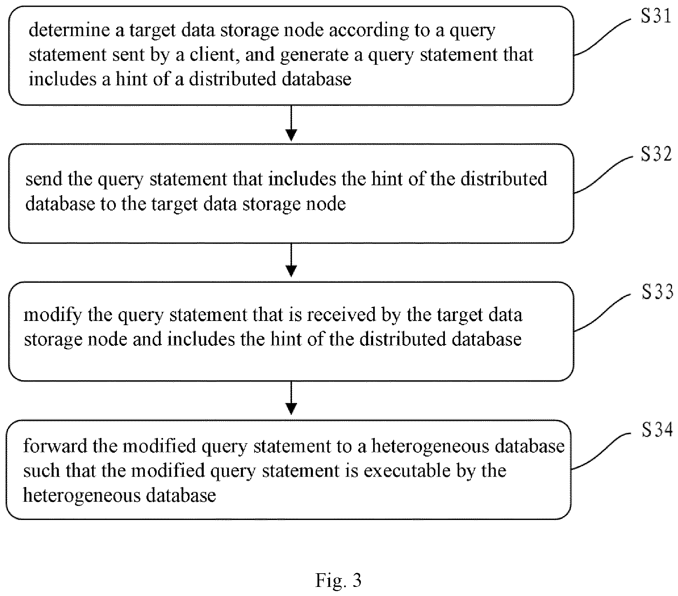

As shown in FIG. 3, according to a third embodiment of the present application, a method for accessing a heterogeneous database by a distributed database is provided, including steps of S31 to S34.

At S31, a target data storage node is determined according to a query statement sent by a client, and a query statement that includes a hint of the distributed database is generated.

In this embodiment, the query statement sent by the client may be a single-table strong consistency query statement or a two-table joint strong consistency query statement, which is not limited here.

In this embodiment, the target data storage node may be determined through metadata.

At S32, the query statement that includes the hint of the distributed database is sent to the target data storage node.

At S33, the query statement that is received by the target data storage node and includes the hint of the distributed database is modified.

In this embodiment, the modification of the query statement that is received by the target data storage node and includes the hint of the distributed database means the removal of the hint of the distributed database.

At S34, the modified query statement is forwarded to the heterogeneous database such that the modified query statement is executable by the heterogeneous database.

In an embodiment, after forwarding the modified query statement to the heterogeneous database, the method further includes:
- acquiring a result set returned by the heterogeneous database; and
- processing the result set and returning the processed result set to the client.

In another embodiment, before determining the target data storage node according to the query statement sent by the client and generating the query statement that includes the hint of the distributed database, the method further includes:
- creating a mapping table between the distributed database and the heterogeneous database.

In this embodiment, by creating a mapping table (corresponding to a table in the heterogeneous database) in the distributed database, tables saved in the heterogeneous database may be accessed directly; operations may be performed on the tables in the heterogeneous database, including but not limited to adding, deleting, modifying and querying; local tables and the tables in the heterogeneous database may be mixed for joint query; and operations performed on the tables in the heterogeneous database may be supported in transactions.

In this embodiment, creating the mapping table between the distributed database and the heterogeneous database includes:
- creating, in the distributed database, a mapping table for a table in the heterogeneous database, and recording data storage nodes used for creating the mapping table; and
- sending a data definition language (DDL) statement to the data storage nodes, to synchronize the DDL statement between a master node and a standby node of the data storage nodes.

In this embodiment, before sending the DDL statement to the data storage node, the method further includes:
- determining whether the mapping table is initially created or whether the data storage node used for creating the mapping table is consistent with a previous used data storage node;
- executing the step of sending the DDL statement to the data storage node in response to the mapping table being initially created or the data storage node used for creating the mapping table being consistent with the previous used data storage node; and
- returning an error hint in response to the mapping table being not initially created or the data storage node used for creating the mapping table being not consistent with the previous used data storage node.

In this embodiment, the returned error hint may be used to prompt the user which data storage node is to be used for creation of the mapping table.

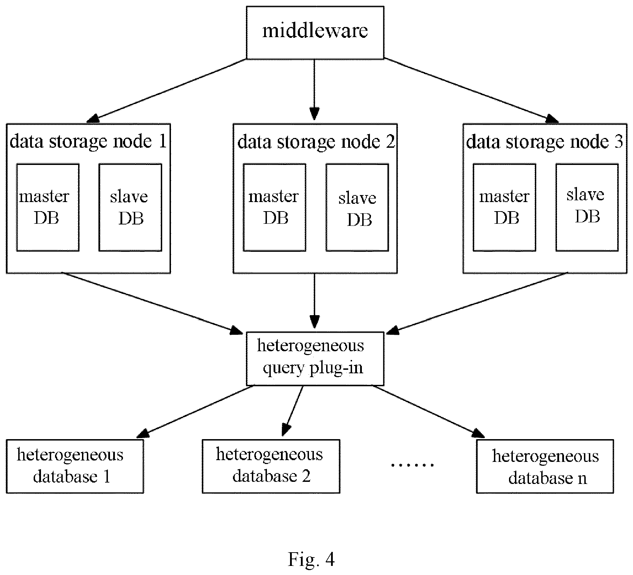

In order to illustrate this embodiment, the process of accessing a heterogeneous database by a distributed database will be described below with reference to FIGs. 4-7.

FIG. 4 is a system structure diagram for accessing a heterogeneous database by a distributed database. The system includes a middleware, multiple data storage nodes, a heterogeneous query plug-in and multiple heterogeneous databases, where each of the data storage nodes includes a master DB and a slave DB.

The middleware may be configured to receive SQL access requests, parse and optimize SQL, summarize SQL results, and control distributed transactions.

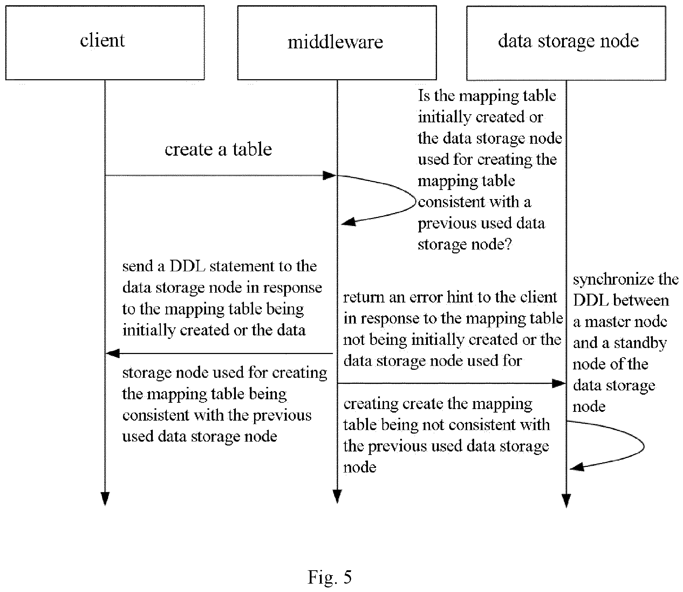

FIG. 5 is a sequence diagram for creating a mapping table, including the following steps.

A client uses a syntax for creating a table of a distributed database to create a local mapping table connected to a table in a heterogeneous database through a middleware, and records a data storage node.

The middleware determines whether the mapping table is initially created or whether the data storage node used for creating the mapping table is consistent with the previous used data storage node.

The middleware returns an error hint to the client in response to the mapping table being not initially created, or the data storage node used for creating the mapping table being not consistent with the previous used data storage node, to prompt the user which data storage node is to be used for creation of the mapping table.

The middleware sends a DDL statement to the data storage node in response to the mapping table being initially created or the data storage node used for creating the mapping table being consistent with the previous used data storage node; the DDL statement is synchronized between the master DB and the slave DB of the data storage node; such that the mapping table is created on the slave DB.

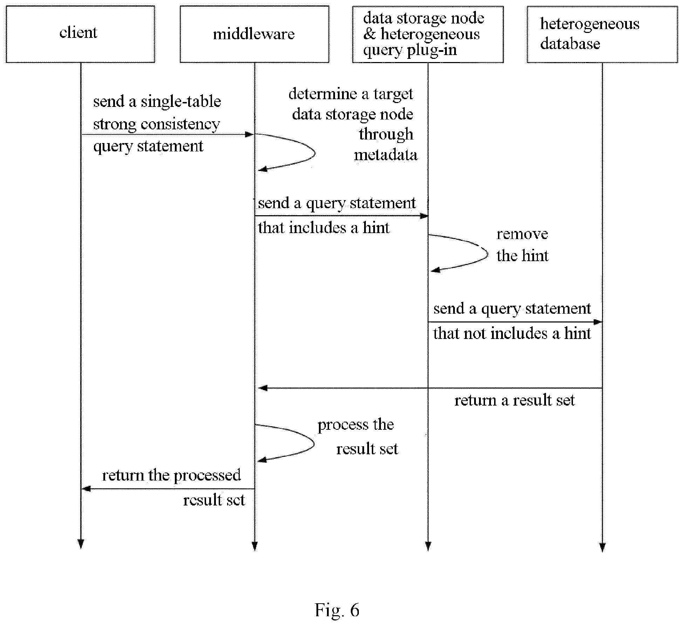

FIG. 6 is a sequence diagram of a single-table strong consistency query (assuming that the table t1 is a mapping table of a heterogeneous database), including the following steps.

A client sends a single-table strong consistency query statement to a middleware.

The middleware determines a target data storage node through metadata, generates a query statement that includes a hint of a distributed database, and sends the query statement that includes the hint of the distributed database to the target data storage node.

A heterogeneous query plug-in removes the hint of the distributed database, and forwards the modified query statement to the heterogeneous database, where the table t1 is a mapping table of a heterogeneous database.

The heterogeneous database executes the modified query statement and returns a result set to the middleware.

The middleware processes the hint of the distributed database needed in the result set, and returns the processed result set to the client.

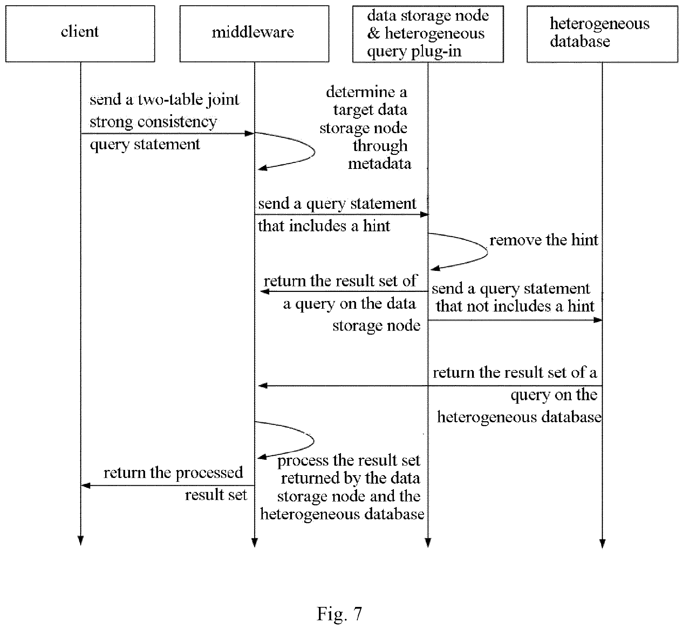

FIG. 7 is a sequence diagram of a two-table joint strong consistency query (assuming that the table t1 is a local table of a distributed database and the table t2 is a mapping table of a heterogeneous database), including the following steps.

A client sends a two-table joint strong consistency query statement.

A middleware determines a target data storage node through metadata, generates a query statement that includes a hint of the distributed database, and sends the query statement that includes the hint of the distributed database to the target data storage node.

The data storage node removes the hint of the distributed database from the query statement related to the table t1, executes the query statement and returns a query result to the middleware, where the table t1 is a local table of the distributed database.

A heterogeneous query plug-in removes a column of global transaction ID (GTID), and forwards the modified query statement related to the table t2 to the heterogeneous database, where the table t2 is a mapping table of the heterogeneous database; the heterogeneous database executes a query and returns a result set to the middleware.

The middleware processes the hint of the distributed database needed in the result set, merges and sorts the result set according to a SQL condition of a joint query, and returns the processed result set to the client.

According to the method for accessing a heterogeneous database by a distributed database in the embodiments of the present application, the operation of tables in the heterogeneous database by the distributed database is realized through the heterogeneous query plug-in, and the joint query of local tables and tables in the heterogeneous database is supported, so that the method has good scalability and operability.

### Fourth embodiment

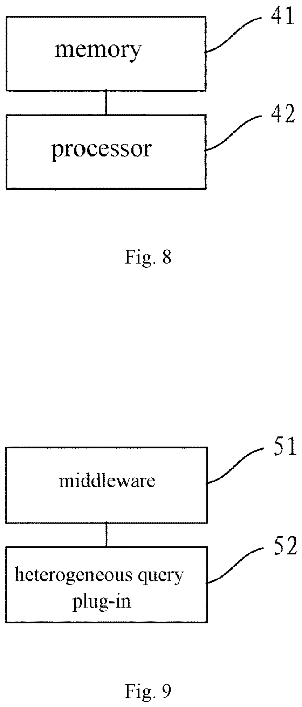

As shown in FIG. 8, according to a fourth embodiment of the present application, an apparatus for accessing a heterogeneous database by a distributed database is provided. The apparatus includes a memory 41, a processor 42 and a computer program stored in the memory 41 and executable on the processor 42, where the computer program, when executed by the processor 42, causes the processor 42 to implement the following steps of the method for accessing a heterogeneous database by a distributed database:
- determining a target data storage node according to a query statement sent by a client and generating a query statement that includes a hint of the distributed database;
- sending the query statement that includes the hint of the distributed database to the target data storage node;
- modifying the query statement that is received by the target data storage node and includes the hint of the distributed database; and
- forwarding the modified query statement to the heterogeneous database such that the
modified query statement is executable by the heterogeneous database.

The processor 42 is also configured to execute the computer program to implement the following steps of the method for accessing a heterogeneous database by a distributed database:
- acquiring a result set returned by the heterogeneous database; and
- processing the result set and returning the processed result set to the client.

The processor 42 is also configured to execute the computer program to implement the following steps of the method for accessing a heterogeneous database by a distributed database:
- creating a mapping table between the distributed database and the heterogeneous database.

The processor 42 is also configured to execute the computer program to implement the following steps of the method for accessing a heterogeneous database by a distributed database:
- creating, in the distributed database, a mapping table of a table in the heterogeneous database, and a recording data storage node used for creating the mapping table; and
- sending a DDL statement to the data storage node, to synchronize the DDL statement between a master node and a standby node of the data storage node.

The processor 42 is also configured to execute the computer program to implement the following steps of the method for accessing a heterogeneous database by a distributed database:
- determining whether the mapping table is initially created or whether the data storage node used for creating the mapping table is consistent with a previous used data storage node;
- executing the step of sending the DDL statement to the data storage node in response to the mapping table being initially created or the data storage node used for creating the mapping table being consistent with the previous used data storage node; and
- returning an error hint in response to the mapping table being not initially created or the data storage node used for creating the mapping table being not consistent with the previous used data storage node.

According to the apparatus for accessing a heterogeneous database by a distributed database in the embodiments of the present application, the operation of tables in the heterogeneous database by the distributed database is realized, and the joint query of local tables and tables in the heterogeneous database is supported, so that the apparatus has good scalability and operability.

### Fifth embodiment

As shown in FIG. 9, according to a fifth embodiment of the present application, a device for accessing a heterogeneous database by a distributed database is provided. The device includes a middleware 51 and a heterogeneous query plug-in 52.

The middleware 51 is configured to determine a target data storage node according to a query statement sent by a client and generate a query statement that includes a hint of the distributed database, and send the query statement that includes the hint of the distributed database to the target data storage node.

The heterogeneous query plug-in 52 is configured to modify the query statement that is received by the target data storage node and includes the hint of the distributed database, and forward the modified query statement to the heterogeneous database such that the modified query statement is executable by the heterogeneous database.

In an embodiment, the middleware 51 is also configured to acquire a result set returned by the heterogeneous database, and process the result set and return the processed result set to the client.

In another embodiment, the middleware 51 is also configured to create a mapping table between the distributed database and the heterogeneous database.

In this embodiment, the middleware 51 is also configured to create a mapping table for a table in the heterogeneous database and record a data storage node used for creating the mapping table, and send a DDL statement to the data storage node, to synchronize the DDL statement between a master node and a standby node of the data storage node.

In this embodiment, the middleware 51 is also configured to: determine whether the mapping table is initially created or whether the data storage node used for creating the mapping table is consistent with a previous used data storage node; send the DDL statement to the data storage node in response to the mapping table being initially created or the data storage node used for creating the mapping table being consistent with the previous used data storage node; and return an error hint in response to the mapping table being not initially created or the data storage node used for creating the mapping table being not consistent with the previous used data storage node.

According to the device for accessing a heterogeneous database by a distributed database in the embodiments of the present application, the operation of tables in the heterogeneous database by the distributed database is realized, and the joint query of local tables and tables in the heterogeneous database is supported, so that the device has good scalability and operability.

### Sixth embodiment

According to a sixth embodiment of the present application, provided is a computer-readable storage medium storing a computer program which, when executed by a processor, cause the processor to implement the step of the method for accessing a heterogeneous database by a distributed database described in the first embodiment or the third embodiment.

It should be noted that the computer-readable storage medium in this embodiment belongs to a same concept as the method in the first embodiment or the third embodiment, and the specific implementation process is detailed in the method embodiment. The technical features in the method embodiment are applicable in this embodiment, which will not be repeated again.

According to the computer-readable storage medium in the embodiments of the present application, the operation of tables in the heterogeneous database by the distributed database is realized, the joint query of local tables and tables in the heterogeneous database is supported, which has good scalability and operability.

Those having ordinary skills in the art shall understand that all or some of the steps in a method, and all or some of the functional modules/units in a system or an apparatus disclosed above may be implemented as software, firmware, hardware, and appropriate combinations thereof. In a hardware implementation, partitioning between functional modules/units mentioned in the above description does not necessarily correspond to partitioning of physical components. For example, a physical component may have multiple functions, while a function or step may be performed by several physical components in cooperation. Some or all of physical component may be implemented as software execute by a processor, such as a central processor, digital signal processor or microprocessor, or as hardware, or as an integrated circuit, such as an application-specific integrated circuit. Such software may be distributed over computer-readable medium, which may include computer storage medium (or non-transitory medium) and communication medium (or transitory medium). As known to those having ordinary skills in the art, the term computer storage medium includes volatile and non-volatile, removable and non-removable medium implemented in any method or technique configured to store information, such as computer readable instruction, data structure, program module or other data. Computer storage medium include, but is not limited to, RAM, ROM, EEPROM, flash memory or other memory technologies, CD-ROM, digital versatile disk (DVD) or other optical disk storage, magnetic cassette, magnetic tape, magnetic disk storage or other magnetic storage devices, or any other medium that may be configured to store desired information and that may be accessed by a computer. Furthermore, as is well known to those having ordinary skills in the art, communication medium typically contain computer-readable instruction(s), data structure(s), program module(s), or other data in a modulated data signal such as carrier wave or other transmission mechanism, and may include any information delivery medium.

Preferred embodiments of the present application have been described above with reference to the accompanying drawings, and are not thereby limiting the scope of the present application. Any modifications, equivalent replacements and improvements made by those having ordinary skills in the art without departing from the scope and nature of the present application shall fall within the scope of the present application.

## Claims

1. A method for accessing a heterogeneous database by a distributed database, comprising:
modifying a query statement that is received by a data storage node and comprises a hint of the distributed database; and
forwarding the modified query statement to the heterogeneous database such that the modified query statement is executable by the heterogeneous database.

2. A heterogeneous query plug-in, comprising a memory, a processor, and a computer program stored in the memory and executable by the processor, wherein the computer program, when executed by the processor, cause the processor to perform the method for accessing a heterogeneous database by a distributed database of claim 1.

3. A method for accessing a heterogeneous database by a distributed database, comprising:
determining a target data storage node according to a query statement sent by a client and generating a query statement that comprises a hint of the distributed database;
sending the query statement that comprises the hint of the distributed database to the target data storage node;
modifying the query statement that is received by the target data storage node and comprises the hint of the distributed database; and
forwarding the modified query statement to the heterogeneous database such that the modified query statement is executable by the heterogeneous database.

4. The method of claim 3, wherein after forwarding the modified query statement to the heterogeneous database, the method further comprises:
acquiring a result set returned by the heterogeneous database; and
processing the result set and returning the processed result set to the client.

5. The method of claim 3, wherein before determining the target data storage node according to the query statement sent by the client and generating the query statement that comprises the hint of the distributed database, the method further comprises:
creating a mapping table between the distributed database and the heterogeneous database.

6. The method of claim 5, wherein creating the mapping table between the distributed database and the heterogeneous database comprises:
creating, in the distributed database, a mapping table for a table in the heterogeneous database, and recording a data storage node used for creating the mapping table; and
sending a data definition language, DDL statement to the data storage node, to synchronize the DDL statement between a master and a standby of the data storage node.

7. The method of claim 6, wherein before sending the DDL statement to the data storage node, the method further comprises:
determining whether the mapping table is initially created or whether the data storage node used for creating the mapping table is consistent with a previous used data storage node;
executing the step of sending the DDL statement to the data storage node in response to the mapping table being initially created or the data storage node used for creating the mapping table being consistent with the previous used data storage node; and
returning an error hint in response to the mapping table being not initially created or the data storage node used for creating the mapping table being not consistent with the previous used data storage node.

8. A device for accessing a heterogeneous database by a distributed database, comprising:
a middleware, configured to determine a target data storage node according to a query statement sent by a client and generate a query statement that comprises a hint of the distributed database; and send the query statement that comprises the hint of the distributed database to the target data storage node; and
a heterogeneous query plug-in, configured to modify the query statement that is received by the target data storage node and comprises the hint of the distributed database; and forward the modified query statement to the heterogeneous database such that the modified query statement is executable by the heterogeneous database.

9. An apparatus for accessing a heterogeneous database by a distributed database, comprising a memory, a processor, and a computer program stored on the memory and executable by the processor, wherein the computer program, when executed by the processor, cause the processor to perform the method for accessing a heterogeneous database by a distributed database of any of claims 3 to 7.

10. A computer-readable storage medium storing a computer program which, when executed by a processor, cause the processor to perform the method for accessing a heterogeneous database by a distributed database of claim 1 or the method for accessing a heterogeneous database by a distributed database of any of claims 3 to 7.
